# FASCICULE DE BREVET EUROPEEN

(11) **EP 2 624 666 B1**
(45) Date de publication et mention de la délivrance du brevet: **11.06.2014**
(21) Numéro de dépôt: 12190607.7
(22) Date de dépôt: 30.10.2012
(51) Int. Cl.: H05B 37/02, H05B 39/04

(54) **Dispositif variateur double de l'intensité de la lumière sans raccordement au neutre**
Doppelvorrichtung zur Veränderung der Lichtintensität ohne Anschluss an Nullleiter
Double dimmer device without connection to neutral

(30) Priorité: 30.11.2011 FR 1160959
(43) Date de publication de la demande: 07.08.2013
(73) Titulaire: Hager Controls SAS, 67700 Saverne (FR)
(72) Inventeur: Elsass, Marc, 67140 Barr (FR); Poisson, Christophe, 67700 Saverne (FR)
(74) Mandataire: Littolff, Denis

(56) Documents cités:
- DE-U1-202005 018 500
- US-A1- 2009 039 854
- US-A1- 2011 012 528

## Description

La présente invention a trait à un dispositif variateur de l'intensité de la lumière double et sans raccordement au neutre, c'est-à-dire un variateur « deux fils » à deux sorties ou voies de variation conçues pour deux circuits de charges lumineuses de tout type, par exemple à filaments comme des ampoules à incandescence ou halogènes, ou pour les ampoules de type fluo compactes, ou encore pour les charges de type lampes à LED, lorsqu'ils sont variables.

Le double variateur d'éclairage de l'invention est en pratique prévu pour être disposé en lieu et place d'un double interrupteur de lampe, c'est-à-dire dans une boîte d'encastrement murale standard, sans possibilité de connexion au neutre. Le dispositif de l'invention est par ailleurs prévu pour fonctionner avec une interface radiofréquence commune aux deux voies de variation, c'est-à-dire qu'il doit pouvoir être piloté par une télécommande manuelle gérant à distance l'intensité lumineuse de charges telles que celles mentionnées auparavant.

Le problème est qu'un tel variateur double a besoin, pour alimenter son interface radiofréquence, d'un courant d'alimentation environ dix fois supérieur à ce qui est nécessaire à l'alimentation d'un variateur dépourvu d'une telle interface. Les ordres de grandeur sont en effet de 1 mA (en l'absence d'interface radiofréquence) à plus de 10 mA (en présence d'une telle interface).

Le dispositif double de l'invention comporte en fait une unité de contrôle commandant deux variateurs simples, comprenant chacun d'une part un étage de puissance à découpage de phase connecté entre la phase du secteur et au moins une charge lumineuse, et d'autre part une alimentation à découpage. Cette configuration entraîne une architecture complexe et un niveau d'intégration contraignant pour une mise en oeuvre dans un espace aussi réduit qu'une boîte d'encastrement mural d'un diamètre de 60 mm, comme c'est le cas pour les équipements standards. La publication US 2009/0039854 A1 divulgue un radiateur selon le préambule de la revendication 1.

C'est la raison pour laquelle un tel produit n'existe pas à l'heure actuelle, la solution utilisée jusqu'ici consistant à utiliser deux variateurs complètement indépendants et séparés, dans deux boîtes d'encastrement distinctes.

L'invention remédie à cette absence, en proposant de disposer dans une unique boîte d'encastrement mural deux dispositifs de variation d'éclairage à découpage de phase pour deux circuits de charges lumineuses séparés, le dispositif double comportant par ailleurs une interface homme-machine donnant accès à un pilotage distinct et à distance des deux variateurs simples pour la commande séparée du niveau de luminosité dans lesdits circuits lumineux.

A cet effet, le dispositif de l'invention se caractérise à titre principal en ce qu'il comporte une interface radiofréquence commune aux deux variateurs simples et raccordée à l'unité de commande pour former une interface de commande radiofréquence alimentée par l'alimentation d'un premier variateur simple, une isolation galvanique étant disposée entre l'interface de commande radiofréquence et l'alimentation du second variateur simple.

L'interface de commande radiofréquence étant commune aux deux variateurs, il devient nécessaire de mettre en place une telle isolation galvanique entre l'un des variateurs, c'est à dire une voie de commande possible de la variation de lumière dans au moins une charge lumineuse, et l'unité de commande radiofréquence, celle-ci étant dès lors alimentée par l'autre variateur ou autre voie de variation des charges lumineuses d'un second circuit de luminaires distinct.

Les deux variateurs sont donc indépendants, notamment dotés de leur propre alimentation secteur. Ils sont par ailleurs évidemment chacun reliés à l'interface de commande radiofréquence qui les commande, de préférence par une liaison série, la liaison série entre le second variateur et l'interface de commande radiofréquence étant alors isolée galvaniquement au moyen d'opto-coupleurs.

Plus précisément, lesdites liaisons séries sont asynchrones de type RX/TX, chaque conducteur de la liaison isolée étant muni d'un opto-coupleur.

Comme indiqué auparavant, les deux variateurs simples fonctionnant de manière indépendante sont chacun dotés d'une alimentation à découpage. De préférence, au moins l'alimentation du variateur reliée à l'interface de commande radiofréquence est du type Fly-Back.

Ce type d'alimentation à découpage permet un rendement optimum sur une application « deux fils », c'est-à-dire sans raccordement au fil de neutre, comme c'est le cas en l'occurrence.

Classiquement, l'étage de puissance de découpage de phase est basé sur deux transistors MOSFET de puissance disposés relativement l'un à l'autre de manière à couvrir la totalité de la période du secteur.

Le produit étant destiné à être connecté à la place d'un double interrupteur de lampe, il comprend des moyens de commande mécanique de type boutons-poussoirs également connectés à l'unité de commande, et qui permettent le cas échéant de procéder à des commandes directes au niveau de l'emplacement de la commande murale.

L'unité de commande peut, de préférence, être un microcontrôleur gérant les deux variateurs simples à l'aide des liaisons séries asynchrones précitées, sur la base des commandes reçues soit via les boutons-poussoirs, soit des signaux radiofréquences issus d'une télécommande actionnée par l'utilisateur.

L'invention va à présent être décrite plus en détail, en référence à l'unique figure, consistant en un schéma électronique du dispositif variateur double de l'invention.

Les deux variateurs simples comportent chacun un étage de puissance de découpage de phase (1, 3) respectivement connectés entre la phase et au moins une charge lumineuse N° 1, et la phase et au moins une charge lumineuse N° 2. Chacun de ces étages de puissance (1, 3) est muni de sa propre alimentation (2, 4), l'ensemble alimentation/étage de puissance formant un variateur simple (V1, V2) au sens de l'invention décrite dans ce texte.

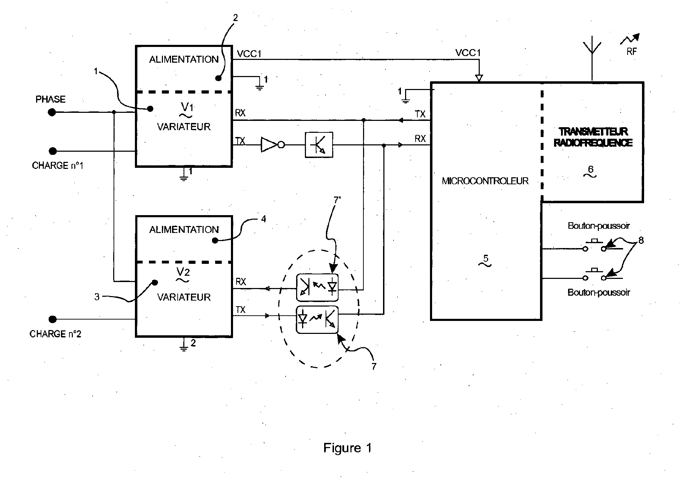

L'alimentation (2) du variateur (V1) est reliée au microcontrôleur (5) via la liaison VCC1 : l'alimentation du microcontrôleur (5) est donc prise en charge par le variateur simple (V1) dans la configuration montrée en figure 1. Le microcontrôleur (5) et l'étage de puissance (1) du variateur (V1) sont par ailleurs reliés via une liaison série asynchrone classique à deux conducteurs connectant les entrées/sorties RX/TX du microcontrôleur (5) respectivement aux connexions TX/RX du variateur (V1). Cette liaison série n'est pas isolée.

En revanche, la liaison série similaire reliant le variateur (V2) au microcontrôleur (5), consistant également en une liaison série asynchrone de type RX/TX, est dotée d'une isolation galvanique sous la forme d'opto-coupleurs (7, 7') isolant le variateur (V2) du microcontrôleur (5) puisque ce dernier est alimenté par l'alimentation Fly-Back (2) du premier variateur (V1).

Le microcontrôleur (5) coopère avec un transmetteur radiofréquence (6), l'ensemble formant l'interface de commande radiofréquence dont il a été question auparavant.

Le transmetteur radiofréquence (6) est muni d'une antenne lui permettant de réceptionner les signaux émis par une télécommande actionnée par un utilisateur. Le microcontrôleur est par ailleurs relié à des boutons-poussoirs (8), organes de commande manuels présents directement au niveau du boîtier.

Le dispositif variateur double de l'invention permet de remplacer un double interrupteur mural associé à deux circuits lumineux distincts et dispose à cet effet d'un double variateur dit universel de type « deux fils », c'est-à-dire fonctionnant sans raccordement au neutre, et pourvu d'une interface radiofréquence, l'ensemble étant intégré dans un boîtier classique ne nécessitant aucune modification de l'environnement mural.

## Revendications

1. Dispositif variateur double sans raccordement au neutre de l'intensité de la lumière dans deux circuits de charges lumineuses distincts, par exemple du type fluo compactes ou à LED et variables, comportant
- une unité de contrôle commandant deux variateurs simples comprenant chacun un étage de puissance de découpage de phase connecté entre la phase du secteur et au moins une charge lumineuse, et
une interface radiofréquence commune aux deux variateurs simples et raccordée à l'unité de commande pour former une interface de commande radiofréquence alimentée par l'alimentation d'un premier variateur simple,
**caractérisé en ce**
**qu'**il comporte pour chaque variateur simple une alimentation à découpage, et
**qu'**une isolation galvanique est disposée entre l'interface de commande radiofréquence et l'alimentation du second variateur simple.

2. Dispositif variateur double selon la revendication précédente, **caractérisé en ce que** les deux variateurs simples sont chacun reliés à l'interface de commande radiofréquence par une liaison série, la liaison série entre le second variateur et l'interface de commande radiofréquence étant isolée galvaniquement au moyen d'opto-coupleurs.

3. Dispositif variateur double selon la revendication précédente, **caractérisé en ce que** les liaisons séries sont asynchrones de type RX/TX, chaque conducteur de la liaison isolée étant muni d'un opto-coupleur.

4. Dispositif variateur double selon l'une quelconque des revendications précédentes, **caractérisé en ce qu'**au moins l'alimentation du variateur simple reliée à l'interface de commande radiofréquence est du type Fly-Back.

5. Dispositif variateur double selon l'une quelconque des revendications précédentes, **caractérisé en ce que** l'étage de puissance de découpage de phase est basé sur deux transistors MOSFET de puissance.

6. Dispositif variateur double selon l'une quelconque des revendications précédentes, **caractérisé en ce que** des moyens de commandes de type boutons-poussoirs sont connectés à l'unité de commande.

7. Dispositif variateur double selon l'une quelconque des revendications précédentes, **caractérisé en ce que** l'unité de commande est un microcontrôleur.

## Patentansprüche

1. Doppelreglervorrichtung ohne Anschluss an den Nullleiter der Lichtintensität in zwei Kreisen unterschiedlicher Lichtlasten, beispielsweise des Energiespartyps oder mit LED und Variablen, die aufweist:
- eine Steuereinheit, die zwei Einfachregler steuert, die jeweils eine Phasenanschnitt-Leistungsstufe umfassen, die zwischen der Netzphase und mindestens einer Lichtlast geschaltet ist, und
- eine für die zwei Einfachregler gemeinsame Funkfrequenzschnittstelle, die an die Steuereinheit angeschlossen ist, um eine Funkfrequenz-Steuerschnittstelle zu bilden, die durch Versorgung eines ersten Einfachreglers versorgt wird, **dadurch gekennzeichnet, dass**
- sie für jeden Einfachregler eine Anschnitt-Versorgung aufweist und
- eine galvanische Isolierung zwischen der Funkfrequenz-Steuerschnittstelle und der Versorgung des zweiten Einfachreglers angeordnet ist.

2. Doppelreglervorrichtung nach vorangehendem Anspruch, **dadurch gekennzeichnet, dass** die zwei Einfachregler jeweils mit der Funkfrequenz-Steuerschnittstelle durch eine Reihenverbindung verbunden sind, wobei die Reihenverbindung zwischen dem zweiten Regler und der Funkfrequenz-Steuerschnittstelle mit Hilfe von Optokopplern galvanisch isoliert ist.

3. Doppelreglervorrichtung nach vorangehendem Anspruch, **dadurch gekennzeichnet, dass** die Reihenverbindungen asynchron vom Typ RX/TX sind, wobei jeder Leiter der isolierten Verbindung mit einem Optokoppler ausgestattet ist.

4. Doppelreglervorrichtung nach einem der vorangehenden Ansprüche, **dadurch gekennzeichnet, dass** mindestens die Versorgung des Einfachreglers, die mit der Funkfrequenz-Steuerschnittstelle verbunden ist, vom Typ Fly-Back ist.

5. Doppelreglervorrichtung nach einem der vorangehenden Ansprüche, **dadurch gekennzeichnet, dass** die Phasenanschnitt-Leistungsstufe auf zwei MOSFET-Leistungstransistoren basiert.

6. Doppelvorrichtung nach einem der vorangehenden Ansprüche, **dadurch gekennzeichnet, dass** Steuermittel vom Typ Druckknöpfe an die Steuereinheit angeschlossen sind.

7. Doppelvorrichtung nach einem der vorangehenden Ansprüche, **dadurch gekennzeichnet, dass** die Steuereinheit ein Mikrocontroller ist.

## Claims

1. Dual dimmer device without a neutral connection for changing the intensity of the light in two separate and variable lighting circuits, for example with compact fluorescent or LED lighting, containing:
- a control unit controlling two individual dimmers each having a phase angle controller connected between the phase of the supply and at least one of the lighting loads,
- a radio-frequency interface which is common to the two individual dimmers and connected to the control unit to form a radio-frequency control interface supplied by the power supply to the first dimmer, **characterized in that**,
- each individual dimmer contains a switch-mode power supply and that,
- a galvanic isolator is positioned between the radio-frequency control interface and the supply to the second individual dimmer.

2. Dual dimmer device according to the preceding claim, **characterized in that** the two individual dimmers are each linked to the radio-frequency control interface by a series link, the series link between the second dimmer and the radio-frequency control interface being galvanically isolated by means of opto-isolators.

3. Dual dimmer device according to the preceding claim, **characterized in that** the series links are of the RX/TX asynchronous type, each conductor of the isolated link being fitted with an opto-isolator.

4. Dual dimmer device according to any one of the preceding claims, **characterized in that** at least the supply of the dimmer linked to the radio-frequency control interface is of the Fly-Back type.

5. Dual dimmer device according to any one of the preceding claims, **characterized in that** the phase angle controller is based on two MOSFET power transistors.

6. Dual dimmer device according to any one of the preceding claims, **characterized in that** push-button controllers are connected to the control unit.

7. Dual dimmer device according to any one of the preceding claims, **characterized in that** the control unit is a microcontroller.
